# NEW EUROPEAN PATENT SPECIFICATION

(11) **EP 0 792 615 B2**
(45) Date of publication and mention of the opposition decision: **26.11.2003**
(45) Mention of the grant of the patent: 03.11.1999
(21) Application number: 97200227.3
(22) Date of filing: 29.01.1997
(51) Int. Cl.: A47L 11/30, A47L 11/40

(54) **Cleaning apparatus**
Reinigungsgerät
Appareil de nettoyage

(30) Priority: 01.03.1996 EP 96103125
(43) Date of publication of application: 03.09.1997
(73) Proprietor: JohnsonDiversey Inc., Sturtevant, Wisconsin 53177-0902 (US)
(72) Inventor: Principe, Rene, 9542 Munchwilen (TG) (CH); Koller, Walter, 9542 Munchwilen (TG) (CH)
(74) Representative: Ruschke, Hans Edvard, Dipl.-Ing.

(56) References cited:
- FR-A- 2 607 076
- PATENT ABSTRACTS OF JAPAN vol. 18, no. 500 (P-1802), 19 September 1994 & JP 06 168027 A (MATSUSHITA ELECTRIC IND CO), 14 June 1994,

## Description

### Field of the invention

The present invention relates to a floor cleaning machine. In particular, it relates to a machine suitable for wet cleaning, comprising suction means for drawing up cleaning liquid applied to the floor surface.

### Background of the invention

Cleaning of large floor areas is usually carried out in practice using an apparatus which is manually pushed forward by an operator. Such apparatuses, usually containing a tank for fresh cleaning liquid as well as a tank for the used liquid sucked up again after cleaning, can therefore be bulky and heavy. As a consequence, they may have little manoeuvrability and be difficult to push forward. Similar apparatuses are further known wherein the rear wheels are driven, for which purpose comparatively heavy drive and transmission means are then required which result in an increase in the weight of the apparatus and decrease its manoeuvrability.

FR-A-2 607 076 discloses a floor cleaning apparatus comprising a frame. This document is directed to the provision of a cleaning apparatus having improved means for varying and regulating the force exerted by a driving wheel.

A catalogue entitled "Hakomatic 450/530" bearing an identification "81-00-1.565" discloses an apparatus for cleaning ground surfaces, comprising a frame, a cleaning member arranged rotatably on the frame, drive means for rotatable driving thereof, an auxiliary wheel and second drive means for assisting the forward movement of the apparatus.

An object of the present invention is to improve the manoeuvrability of such manually operated or machine driven floor cleaning apparatuses.

### Definition of the invention

The present invention provides an apparatus for cleaning a ground, comprising:
- a frame;
- a cleaning member arranged rotatably on the frame and first drive means for rotatable driving thereof;
- one or more wheels arranged on the frame; and
- an auxiliary drive unit comprising an auxiliary wheel arranged on the frame and second drive means for assisting the forward movement of the apparatus, according to claim 1.

### Detailed description of the invention

The second drive means for assisting the forward movement of the apparatus according to the invention, is usually relatively lightly constructed and a heavy transmission via a differential or the like can generally be omitted. As a result, the manoeuvrability of the apparatus according to the invention is improved. The manoeuvrability of the apparatus according to the present invention is also improved by the preferred position of the auxiliary wheel, i.e. roughly between the rear wheels.

The auxiliary wheel is fixed to a pivotable arm which is pivotable between a position close to the vertical and a slightly rearward position as seen in the travel direction of the apparatus. When driven by the second drive means, the auxiliary wheel pushes off against the ground surface and presses itself under the machine, whereby a good contact with the ground surface is obtained and the drive force of the auxiliary wheel (which generally has relatively small dimensions) is optimal. Unevenness in the ground does not represent a problem due to the pivotable arm.

The cleaning apparatus according to the present invention is preferably provided with a single disc-shaped, rotatably drivable cleaning member arranged on the front side of the apparatus which can co-assist the driving of the apparatus, for instance in that a slightly greater pressure force is exerted on this drive member on a sideward position than on the position located opposite. Further advantages, features and details of the present invention will become apparent in the light of the following description of a preferred embodiment thereof with reference to the annexed drawings, in which:

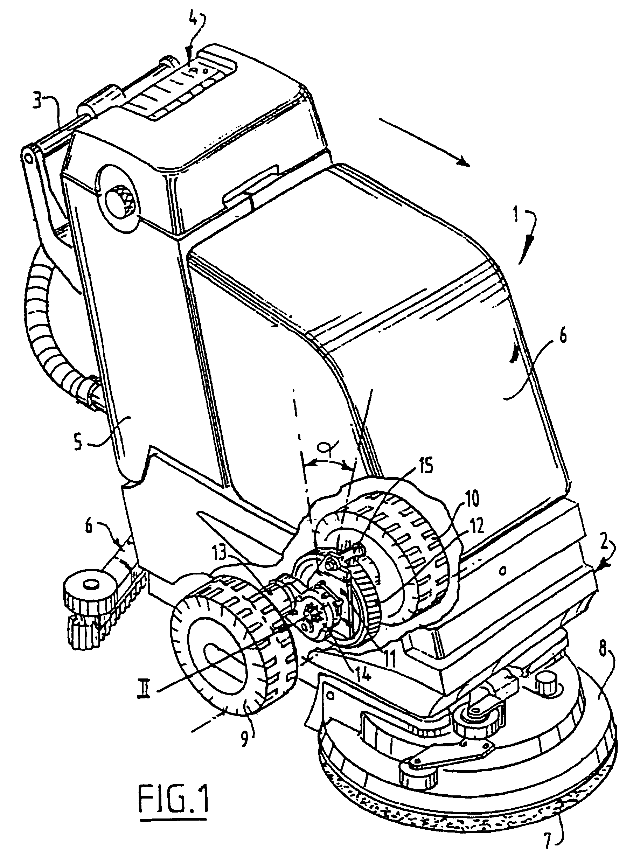

figure 1 shows a partly broken away view in perspective of a preferred embodiment of an apparatus according to the present invention; and
figure 2 is a slightly schematic side view of detail II of figure 1.

A preferred embodiment of an floor cleaning apparatus (1) according to the present invention comprises a frame (2) on which is arranged a push bar (3) for enabling the user to manually push forward the apparatus (1). Close to push-bar (3) is arranged a control panel (4) provided with switches and buttons for the various functions such as ON/OFF, SUCTION, DRIVE etc. The scrubber further comprises a first tank (5) and a second tank (6), of which for instance tank (6) contains fresh cleaning liquid for supplying thereof to the area under a brush (7) which is arranged on a disc (8) rotatable on a vertical axis. Stored in tank (5) is for instance cleaning used liquid which is sucked up from the floor using a suction element or a so-called squeegee.

An auxiliary wheel (12) is arranged on a pivot arm (11) between rear wheels (9), (10) which in this embodiment are non-driven, which auxiliary wheel is driven using an electric motor (13) and a reduction gear unit (14), both of which are likewise arranged on pivot arm (11). This drive wheel is preferably situated roughly between the wheels of the scrubber.

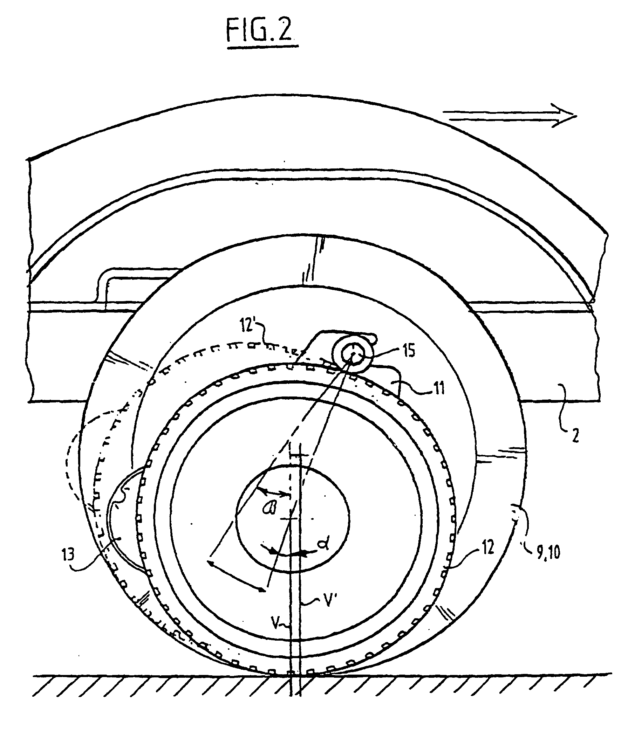

Figure 2 shows that, due to the arm (11) which is arranged on a pivot shaft (15) mounted on the frame, during use the pivot shaft extends slightly vertically relative to the vertical V depending on the position of the scrubber and possible unevenness in the ground surface at brush (7) or lower wheel (12). The position of wheel (12) drawn in full lines extends at a smaller angle α, for instance in the order of magnitude of 5-10° relative to the vertical V, than the position 12' drawn with broken lines which extends for instance at an angle β of roughly 20-45° relative to the vertical V.
When the electric motor (13) is set into operation to drive auxiliary wheel (12), as a result of the reactive force of the ground the wheel (12) is pressed into the position wherein this wheel is situated closest to the vertical, whereby the contact with the ground is as optimal as possible due to the weight of apparatus (1). In a manner not shown a stop for pivot arm (11) can be arranged on the chassis to prevent the arm moving through the vertical position, in which undesired position the drive force of the auxiliary wheel (12) is lost. The length of the pivot arm is preferably such that the angle with the vertical can never become smaller than 5°. Nor must the angle be greater than 45°, more preferably about 30°, in rearward direction of the vertical, since otherwise the friction force between ground and auxiliary wheel (12) is determined to a lesser extent by the weight of the machine, whereby the drive force of auxiliary wheel (12) can decrease considerably.

In the case the tread of the auxiliary wheel (12) becomes worn, the latter will automatically seek a position located slightly closer to the vertical and the drive force thereof thereby remains as optimal as possible.

It is emphasized that the floor cleaning apparatus shown in the Figures illustrates only a preferred embodiment of the invention and that various constructional alternatves will be immediately evident to the person skilled in the art, without departing from the scope of the present invention as specified in the claims.

## Claims

1. Apparatus (1) for cleaning a ground, comprising:
- a frame (2); **characterised in that** the apparatus (1) further comprises
- a cleaning member (7) arranged rotatably on the frame (2) and first drive means for rotatable driving thereof;
- one or more wheels (9, 10) arranged on the frame (2); and
- an auxiliary drive unit comprising an auxiliary wheel (12) arranged on the frame and second drive means (13, 14) for assisting the forward movement of the apparatus (1),
**characterised in that** the second drive means (13, 14) and the auxiliary wheel (12) are arranged on a pivotable arm, which is pivotable at a comparatively small angle relative to the vertical through the centre of the auxiliary wheel, for instance between an angle of about 5° in rearward direction relative to the vertical and an angle of about 30° in rearward direction relative to the vertical, and **in that**, when driven by the second drive means, the auxiliary wheel pushes off against the ground surface and presses itself under the apparatus.

2. Apparatus as claimed in claim 1, wherein the auxiliary wheel (12) and the second drive means (13, 14) therefor are placed roughly beneath the centre of gravity of the apparatus (1).

3. Apparatus as claimed in claim 1 or 2, wherein the auxiliary wheel (12) is arranged approximately between two rear wheels.

4. Apparatus as claimed in any of the foregoing claims, wherein the cleaning member (7) comprises a disc rotatable in a substantially horizontal plane.

5. Apparatus as claimed in any of the foregoing claims, wherein the apparatus (1) is provided with a tank (6) with cleaning liquid in addition to suction means for the cleaning liquid rubbed onto the ground.

## Patentansprüche

1. Gerät (1) zum Reinigen eines Bodens, umfassend:
- einen Rahmen (2); **dadurch gekennzeichnet, dass** das Gerät (1) weiter umfasst
- ein drehbar auf dem Rahmen (2) angeordnetes Reinigungselement (7) und erste Antriebseinrichtungen zum drehbaren Antreiben desselben;
- ein oder mehrere auf dem Rahmen (2) angeordnete Räder (9, 10); und
- eine Hilfsantriebseinheit, umfassend ein auf dem Rahmen angeordnetes Hilfsrad (12) und zweite Antriebseinrichtungen (13, 14) zur Unterstützung der Vorwärtsbewegung des Geräts (1), **dadurch gekennzeichnet, dass** die zweiten Antriebseinrichtungen (13, 14) und das Hilfsrad (12) auf einem Schwenkarm angeordnet sind, der bezüglich der Vertikalen durch die Mitte des Hilfsrades unter einem verhältnismäßig kleinen Winkel verschwenkbar ist, zum Beispiel zwischen einem Winkel von etwa 5° in Rückwärtsrichtung bezüglich der Vertikalen und einem Winkel von etwa 30° in Rückwärtsrichtung bezüglich der Vertikalen, und dass das Hilfsrad, wenn es von den zweiten Antriebseinrichtungen angetrieben wird, sich gegen die Bodenoberfläche abstößt und sich selbst unter das Gerät drückt.

2. Gerät nach Anspruch 1, bei dem das Hilfsrad (12) und die zweiten Antriebseinrichtungen (13,14) dafür etwa unterhalb des Schwerpunktes des Geräts (1) angebracht sind.

3. Gerät nach Anspruch 1 oder 2, bei dem das Hilfsrad (12) etwa zwischen zwei Rädern angeordnet ist.

4. Gerät nach einem der vorangehenden Ansprüche, bei dem das Reinigungselement (7) eine Scheibe umfasst, die in einer im Wesentlichen horizontalen Ebene drehbar ist.

5. Gerät nach einem der vorangehenden Ansprüche, bei dem das Gerät (1) mit einem Tank (6) mit Reinigungsflüssigkeit versehen ist, zusätzlich zu Saugeinrichtungen für die auf den Boden geriebene Reinigungsflüssigkeit.

## Revendications

1. Un appareil (1) pour nettoyer un sol comprenant :
- un châssis (2) ; **caractérisé en ce que** l'appareil (1) comprend, en outre,
- un organe de nettoyage (7) monté à rotation sur le châssis (2) et des premiers moyens d'entraînement pour l'entraîner en rotation ;
- une ou plusieurs roues (9, 10) montées sur le châssis (2) ; et
- un dispositif d'entraînement auxiliaire comprenant une roue auxiliaire (12) montée sur le châssis et des seconds moyens d'entraînement (13, 14) pour aider au déplacement vers l'avant de l'appareil (1), **caractérisé en ce que** les seconds moyens d'entraînement (13, 14) et la roue auxiliaire sont montés sur un bras pivotant qui peut pivoter sur un angle relativement petit par rapport à la verticale passant à travers le centre de la roue auxiliaire, par exemple, entre un angle d'environ 5° dans la direction arrière par rapport à la verticale et un angle d'environ 30° dans la direction arrière par rapport à la verticale et **en ce que**, lorsqu'elle est entraînée par les seconds moyens d'entraînement, la roue auxiliaire prend appui contre la surface du sol et se presse sous l'appareil.

2. Appareil tel que revendiqué dans la revendication 1, dans lequel la roue auxiliaire (12) et les seconds moyens d'entraînement (13, 14) pour ladite roue sont disposés approximativement au dessous du centre de gravité de l'appareil.

3. Appareil tel que revendiqué dans la revendication 1 ou 2, dans lequel la roue auxiliaire (12) est disposée approximativement entre deux roues arrière.

4. Appareil tel que revendiqué dans l'une quelconque des revendications précédentes, dans lequel l'organe de nettoyage (7) comprend un disque monté à rotation dans un plan sensiblement horizontal.

5. Appareil tel que revendiqué dans l'une quelconque des revendications précédentes, dans lequel l'appareil (1) est muni d'un réservoir (6) rempli de liquide de nettoyage en plus de moyens d'aspiration pour aspirer le liquide de nettoyage qui a été frotté sur le sol.
